# EUROPÄISCHE PATENTSCHRIFT

(11) **EP 2 377 696 B1**
(45) Veröffentlichungstag und Bekanntmachung des Hinweises auf die Patenterteilung: **02.11.2016**
(21) Anmeldenummer: 11159104.6
(22) Anmeldetag: 22.03.2011
(51) Int. Cl.: B60C 11/04, B60C 11/13

(54) **Laufstreifenprofil eines Fahrzeugluftreifens**
Run strip profile of a vehicle tyre
Profil de bande de roulement d'un bandage pneumatique de véhicule

(30) Priorität: 15.04.2010 DE 102010016449
(43) Veröffentlichungstag der Anmeldung: 19.10.2011
(73) Patentinhaber: Continental Reifen Deutschland GmbH, 30165 Hannover (DE)
(72) Erfinder: Rittweger, Stefan, 30163, Hannover (DE); Gerhardt, Joachim, 30890, Barsinghausen (DE)
(74) Vertreter: Finger, Karsten

(56) Entgegenhaltungen:
- JP-A- H11 321 238
- JP-A- 2000 016 026

## Beschreibung

Die Erfindung betrifft ein Laufstreifenprofil eines Fahrzeugluftreifens mit radial erhabenen Profilbändern, von denen jeweils zwei durch eine Umfangsrille, welche in radialer Richtung nach innen durch einen Rillengrund und in axialer Richtung A des Fahrzeugluftreifens zu beiden Seiten hin jeweils durch eine eine Profilbandflanke bildende Rillenwand begrenzt wird, axial getrennt sind, wobei in wenigstens einem Umfangsabschnitt eine der beiden Rillenwände mit einem Neigungswinkel β zur Radialen R geneigt ausgebildet ist und die andere der beiden Rillenwände in einem radial inneren Erstreckungsabschnitt der Höhe h₃ mit einem Neigungswinkel α zur Radialen R und in einem sich anschließenden radial äußeren Erstreckungsabschnitt der Höhe h₄ mit einem Neigungswinkel γ zur Radialen R mit α > β > γ ausgebildet ist.

Derartige Fahrzeugluftreifen sind bekannt. Zum Einsatz derartiger Laufstreifenprofile im Winter auf Schnee ist es erforderlich, besondere Traktionseigenschaften in tiefem Schnee zu erzeugen. Hierzu werden häufig die Umfangsrillen längs ihrer Erstreckung mit Versatzstellen ausgebildet, so dass eine Verschachtelung der die Umfangsrillen begrenzenden Profilblockelemente bzw. Profilrippen erfolgt, welche zusätzliche Griffkanten in der Umfangsrille zur Erzeugung von Traktion im Schnee bewirken. Derartige durch Versatz erzeugte Verschachtelungen behindern jedoch auch den Abfluss von Wasser, wodurch die Aquaplaning-Eigenschaften des Fahrzeugluftreifens negativ beeinflusst werden und soweit möglich durch zusätzliche Maßnahmen wieder ausgeglichen werden müssen. Derartige Verschachtelungen können darüber hinaus die Entstehung von störenden Geräuschen beim Abrollen erleichtern.

**Aus der** JP 2000 016026 A **ist ein Laufstreifenprofil gemäß den Merkmalen des Oberbegriffs des Anspruchs 1 bekannt, bei welchem im radial inneren Erstreckungsabschnitt einer Umfangsrille in beiden Rillenwänden jeweils in gleicher Position eine entsprechende Vertiefung ausgebildet ist.**

Der Erfindung liegt die Aufgabe zugrunde, in einfacher Weise ein derartiges Laufstreifenprofil mit verbesserter Schneetraktion bei Aufrechterhaltung guter Aquaplaningeigenschaften zu ermöglichen.

Erfindungsgemäß gelöst wird die Aufgabe durch die Ausbildung eines Laufstreifenprofils eines Fahrzeugluftreifens mit radial erhabenen Profilbändern, von denen jeweils zwei durch eine Umfangsrille, welche in radialer Richtung nach innen durch einen Rillengrund und in axialer Richtung A des Fahrzeugluftreifens zu beiden Seiten hin jeweils durch eine eine Profilbandflanke bildende Rillenwand begrenzt wird, axial getrennt sind, wobei in wenigstens einem Umfangsabschnitt eine der beiden Rillenwände mit einem Neigungswinkel β zur Radialen R geneigt ausgebildet ist und die andere der beiden Rillenwände in einem radial inneren Erstreckungsabschnitt der Höhe h₃ mit einem Neigungswinkel α zur Radialen R und in einem sich anschließenden radial äußeren Erstreckungsabschnitt der Höhe h₄ mit einem Neigungswinkel γ zur Radialen R mit α > β > γ ausgebildet ist, gemäß den Merkmalen von Anspruch 1, bei dem in dem Umfangsabschnitt die eine Rillenwand aus einem radial äußeren Erstreckungsabschnitt der Höhe h₂ mit ebener Fläche der Rillenwand und aus einem sich nach innen anschließender radial inneren Erstreckungsabschnitt der Höhe h₁ mit h₁<h₃ ausgebildet ist, und bei dem dieser radial innere Erstreckungsabschnitt aus wenigstens zwei in Umfangsrichtung hintereinander angeordneten Vertiefungen der in radialer Richtung R gemessenen Höhe h₁ besteht, die in dem Umfangsabschnitt durch einen mit ebener Fläche ausgebildeten Rillenwandabschnitt voneinander beabstandet sind.

Die Vertiefungen erzeugen im radial inneren Erstreckungsbereich der einen Rillenwand eine Aufnahmetasche zur Aufnahme von Schnee, wobei der Schnee durch den mit großem Neigungswinkel α ausgebildeten radial inneren Erstreckungsabschnitt der anderen Rillenwand verstärkt in die Vertiefungen eingepresst wird. Die Innenwandabschnitte mit ebener Rillenwandfläche, die die benachbarten Vertiefungen voneinander trennen, bewirken zusätzliche Griffkanten in Umfangsrichtung. Der Schnee wird über die mit großem Neigungswinkel α der anderen Rillenwand ausgebildeten radial inneren Erstreckungsbereich quer zur Umfangsrille hin in die Vertiefungen eingepresst und erzeugt zwischen den wie ein Steg zwei benachbarte Vertiefungen voneinander beabstandenden Rillenwandabschnitten erhöhte Traktion in Umfangsrichtung durch Griff zwischen Reifen und Schnee. Der in die Vertiefungen eingepresste Schnee bewirkt darüber hinaus eine erhöhte Schnee/Schneereibung zwischen dem in der Tasche gefangenen Schnee und dem in der Rille befindlichen Schnee, wodurch die Traktion weiter erhöht wird. Im radial äußeren Erstreckungsbereich ist die Umfangsrille weitgehend unbeeinflusst von den Vertiefungen geradlinig ausgebildet und ermöglicht einen nahezu störungsfreien Abfluss des Wassers. Somit werden durch die erfindungsgemäße Ausbildung eine verbesserte Traktion auf Schnee in Umfangsrichtung bei guten Aquaplaning-Eigenschaften ermöglicht. Die Geräuschbildung wird darüber hinaus begrenzt.

Besonders vorteilhaft ist die Ausbildung eines Laufstreifenprofils gemäß den Merkmalen von Anspruch 2, wobei die Vertiefungen in der Rillenwand mit einer zentrisch zur Achse des Fahrzeugluftreifens ringsegmentförmige Kontur ausgebildet sind. Die Vertiefungen folgen somit dem Verlauf der Umfangsrillen.

Besonders vorteilhaft ist die Ausbildung eines Laufstreifenprofils gemäß den Merkmalen von Anspruch 3, wobei die Umfangsrille - insbesondere über ihren gesamten Umfang hinweg - mit mehreren unmittelbar in Umfangsrichtung U hintereinander angeordneten derartigen Umfangsabschnitten ausgebildet ist. Hierdurch kann der Wirkungsgrad weiter erhöht werden.

Besonders vorteilhaft ist die Ausbildung eines Laufstreifenprofils gemäß den Merkmalen von Anspruch 4, wobei die Umfangsrille mit in Umfangsrichtung U alternierend angeordneten ersten und zweiten derartigen Umfangsabschnitten ausgebildet ist, wobei bei den ersten Umfangsabschnitten die eine Rillenwand diejenige Rillenwand ist, die zur Außenschulter des Fahrzeugluftreifens weist, und die andere Rillenwand diejenige Rillenwand ist, die zur Innenschulter des Reifens weist, und wobei bei den zweiten Umfangsabschnitten die eine Rillenwand diejenige Rillenwand ist, die zur Innenschulter des Reifens weist, und die andere Rillenwand diejenige Rillenwand ist, die zur Außenschulter des Fahrzeugluftreifens weist. Hierdurch kann die Umfangsille mit einer Art Symmetrie versehen und ein hoher Wirkungsgrad durch viele Taschenabschnitte erzielt werden.

Besonders vorteilhaft ist die Ausbildung eines Laufstreifenprofils gemäß den Merkmalen von Anspruch 5, wobei die Höhe h₁ mit (1/2)P_{T} ≤ h₁ ≤(2/3) P_{T} ausgebildet ist und P_{T} die maximale Rillentiefe der Umfangsrille im Umfangsabschnitt angibt. Hierdurch kann bei ausreichender Ausbildung von Aufnahmetaschen bildenden Vertiefungen eine hohe Steifigkeit des Material radial außerhalb der Vertiefungen sichergestellt werden.

Besonders vorteilhaft ist die Ausbildung eines Laufstreifenprofils gemäß den Merkmalen von Anspruch 6, wobei die Vertiefungen mit einer in Umfangsrichtung U gemessenen Länge L ausgebildet sind mit 5mm ≤ L ≤ 15mm. Hierdurch wird eine hohe Steifigkeit des Material radial außerhalb der Vertiefungen ermöglicht.

Besonders vorteilhaft ist die Ausbildung eines Laufstreifenprofils gemäß den Merkmalen von Anspruch 7, wobei der in dem Umfangsabschnitt mit ebener Fläche ausgebildete die beiden Vertiefungen voneinander beabstandende Rillenwandabschnitt mit einer in Umfangsrichtung U gemessenen Länge s ausgebildet ist mit 1mm ≤ s ≤ 5mm. Hierdurch kann eine ausreichende Steifigkeit des die beiden Vertiefungen voneinander beabstandende Rillenwandabschnitts bei großer Verzahnungswirkung mit dem Schnee sichergestellt werden.

Besonders vorteilhaft ist die Ausbildung eines Laufstreifenprofils gemäß den Merkmalen von Anspruch 8, wobei der in dem Umfangsabschnitt mit ebener Fläche ausgebildete die beiden Vertiefungen voneinander beabstandende Rillenwandabschnitt mit einer in Umfangsrichtung U gemessenen Länge s ausgebildet ist mit s ≤ (1/5)L. Hierdurch kann die Steifigkeit des die beiden Vertiefungen voneinander beabstandende Rillenwandabschnitts und die Verzahnungswirkung mit dem Schnee optimiert werden.

Besonders vorteilhaft ist die Ausbildung eines Laufstreifenprofils gemäß den Merkmalen von Anspruch 9, wobei in dem Umfangsabschnitt in der einen Rillenwand ein radialer Abstand h₅ vom Rillengrund zum radial inneren Erstreckungsbereich ausgebildet ist mit 0mm ≤ h₅ ≤ 2mm.

Besonders vorteilhaft ist die Ausbildung eines Laufstreifenprofils gemäß den Merkmalen von Anspruch 10, wobei in dem Umfangsabschnitt die andere Rillenwand in ihrem radial äußeren Erstreckungsabschnitt der Höhe h₄ mit einem in axialer Richtung A von der Umfangsrille weg gerichteten Versatz b gegenüber dem radial inneren Erstreckungsabschnitt ausgebildet ist mit 0,5mm ≤ b ≤ 2mm. Hierdurch wird im Manteloberflächenbereich des Reifens gerade im Neuzustand mehr Aufnahmevolumen zur Aufnahme von Wasser und somit ein verbessertes Aquaplaningverhalten ermöglicht.

Die Erfindung wird im Folgenden an Hand der in den Figuren 1 bis 9 dargestellten Ausführungsbeispiele näher erläutert. Hierin zeigen
- Fig. 1: einen Umfangsabschnitt eines axialen Ersreckungsabschnitts eines Laufstreifenprofils in Draufsicht,
- Fig.2: das Laufstreifenprofil von Fig.1 in Schnittdarstellung gemäß Schnitt II-II von Fig.1,
- Fig.3: das Laufstreifenprofil von Fig.1 in Schnittdarstellung gemäß Schnitt III-III von Fig.1,
- Fig. 4: das Laufstreifenprofil von Fig.1 in einer perspektivischen Schnittdarstellung,
- Fig. 5: einen Umfangsabschnitt eines axialen Erstreckungsabschnitt eines Laufstreifenprofils in alternativer Ausführung in Draufsicht,
- Fig. 6: das Laufstreifenprofil von Fig.5 in Schnittdarstellung gemäß Schnitt VI-VI von Fig.5
- Fig. 7: das Laufstreifenprofil von Fig.5 in Schnittdarstellung gemäß Schnitt VII-VII von Fig.5
- Fig. 8: das Laufstreifenprofil von Fig.5 in einer perspektivischen Schnittdarstellung,
- Fig. 9: Darstellung einer alternativen Ausbildung einer Rillenwand entsprechend gemäß Schnitt II-II, wobei lediglich die rechte Rillenwand dargestellt ist.

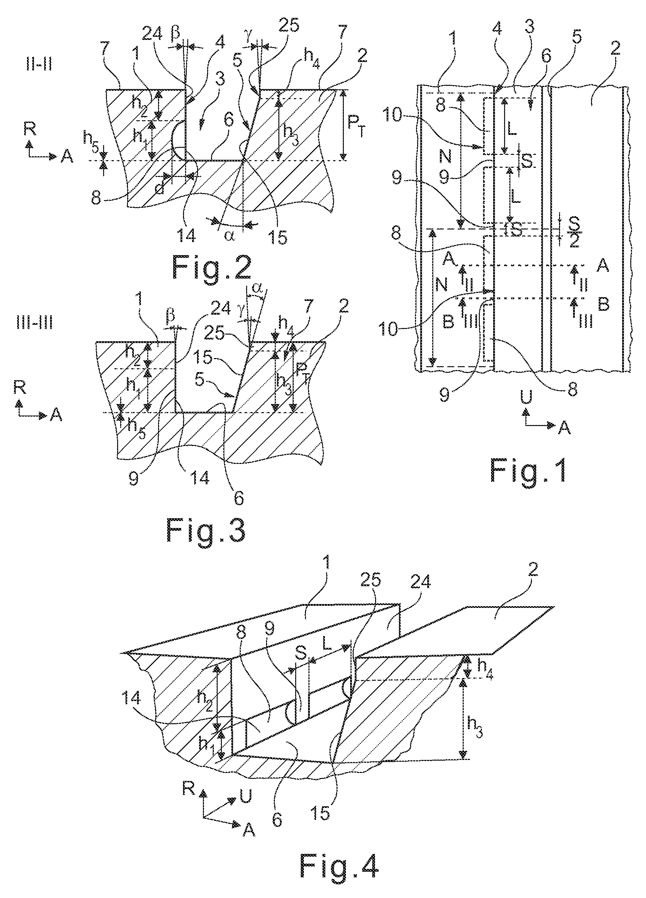

Die Figuren 1 bis 4 zeigen einen Ausschnitt eines Laufstreifenprofiles mit in axialer Richtung A des Fahrzeugluftreifens nebeneinander angeordneten über den gesamten Umfang des Fahrzeugluftreifens erstreckten und in Umfangsrichtung U ausgerichteten Profilrippen 1 und 2, welche durch eine über den gesamten Umfang des Fahrzeugluftreifens erstreckt ausgebildete und in Umfangsrichtung U ausgerichtete Umfangsrille 3 axial voneinander beabstandet sind. Die Umfangsrille 3 ist in radialer Richtung nach innen von einem über den gesamten Umfang des Fahrzeugluftreifens erstreckten im Querschnitt ebenen Profilgrund 6 begrenzt. Die Umfangsrille 3 ist in axialer Richtung A zur Profilrippe 1 hin durch eine über den gesamten Umfang des Fahrzeugluftreifens erstreckte und in radialer Richtung R vom Profilgrund 6 bis zu der die Profilrippe 1 nach radial außen begrenzenden Mantelfläche 7 erstreckte Rillenwand 4 begrenzt, die eine Flanke der Profilrippe 1 bildet. Die Umfangsrille 3 ist in axialer Richtung A zur Profilrippe 2 hin durch eine über den gesamten Umfang des Fahrzeugluftreifens erstreckte und in radialer Richtung R vom Profilgrund 6 bis zu der die Profilrippe 2 nach radial außen begrenzenden Mantelfläche 7 erstreckte Rillenwand 5 begrenzt, die eine Flanke der Profilrippe 1 bildet.

Die Rillenwand 4 ist im Fahrzeugluftreifen die zur Reifeninnenschulter gerichtete Rillenwand. Die Rillenwand 5 ist die im Fahrzeugluftreifen zur Reifenaußenschulter gerichtete Rillenwand. In anderer Ausführung ist die Rillenwand 4 die zur Reifenaußenschulter gerichtete Rillenwand und die Rillenwand 5 die zur Reifeninnenschulter gerichtete Rillenwand.

Wie in Figur 1 zu erkennen ist, ist die Umfangsrille 3 aus in Umfangsrichtung U hintereinander angeordneten Umfangsabschnitten 10 der Umfangslänge N ausgebildet. Wie Fig.2 und Fig.3 zu entnehmen ist, ist in jedem Umfangsabschnitt 10 die Rillenwand 4 in radialer Richtung R aus einem radial äußeren Erstreckungsabschnitt 24, welcher sich ausgehend von der Mantelfläche 7 nach radial innen über eine radiale Erstreckungshöhe h₂ erstreckt, und aus einem in radialer Richtung nach innen anschließenden radial inneren Erstreckungsabschnitt 14 der radialen Erstreckungshöhe h₁ ausgebildet. Die Rillenwand 4 ist unter einem Neigungswinkel β zur Radialen R von der Umfangsrille 3 wegweisend geneigt ausgebildet. Im radial äußeren Erstreckungsbereich 24 ist die Rillenwand 4 in ihrer Oberflächenbeschaffenheit eben ausgebildet. Im radial inneren Erstreckungsbereich 14 sind innerhalb des Umfangsabschnitts 10 zwei in Umfangsrichtung U hintereinander angeordnete konzentrisch zur Reifenachse ringsegmentförmig ausgebildete Vertiefungen 8 mit in Umfangsrichtung U ausgebildeter Erstreckungslänge L ausgebildet. Die ringsegmentförmigen Vertiefungen 8 erstrecken sich in radialer Richtung R über die gesamte Erstreckungshöhe h₁. Die ringsegmentförmigen Vertiefungen weisen in der in Figur 2 dargestellten Querschnittsebene eine kreisabschnitts- oder ellipsenabschnittsförmige Kontur auf und erstrecken sich ausgehend von der Rillenwand 14 über eine maximale senkrecht zur Rillenwand 4 gemessene Tiefe d in die Profilrippe 1 hinein. Die Tiefe d ist mit d=2mm bemessen.

Die beiden ringsegmentförmigen Vertiefungen 8 des Umfangsabschnitts 10 sind in Umfangsrichtung U gesehen durch einen in seiner Oberflächenstruktur eben ausgebildeten Rillenwandabschnitt, der als Steg 9 zwischen den beiden Vertiefungen 8 ausgebildet ist, voneinander beabstandet. Der Steg 9 ist in Umfangsrichtung U mit einer Erstreckungslänge s ausgebildet.

Wie den Figuren 1 bis 4 zu entnehmen ist, ist im Umfangsabschnitt 10 jeweils die gegenüberliegende Rillenwand 5 in radialer Richtung R aus einem radial äußeren Erstreckungsabschnitt 25, welcher sich ausgehend von der die Profilrippe 2 nach radial außen begrenzenden Mantelfläche 7 über eine in radialer Richtung gemessene Erstreckungshöhe h₄ nach innen erstreckt, und aus einem in radialer Richtung R nach innen daran anschließenden radial inneren Erstreckungsabschnitt 15 der radialen Erstreckungshöhe h₃ ausgebildet, welcher sich bis zum Rillengrund 6 erstreckt. Die Profiltiefe P_{T} im Umfangsabschnitt 10 bildet das maximale radiale Erstreckungsmaß zwischen der die Profilrippe 1 und 2 begrenzenden Mantelfläche 7 und dem Rillengrund 6. Der radial äußere Erstreckungsabschnitt 25 der Rillenwand 5 ist mit einem Neigungswinkel γ zur Radialen R von der Umfangsrille 3 wegweisend geneigt und mit einer im Wesentlichen ebenen Oberflächenstruktur ausgebildet. Der radial innere Erstreckungsbereich 15 der Rillenwand 5 ist mit einem Neigungswinkel α zur Radialen R von der Umfangsrille 3 wegweisend geneigt und in seiner Oberflächenbeschaffenheit im Wesentlichen eben ausgebildet.

Die Neigungswinkel α, β und γ sind dabei derart ausgelegt, dass α > β > γ sind. Der Neigungswinkel α ist mit 10° ≤ α ≤ 18° ausgebildet. In besonderer Ausbildung ist α mit 10° ≤ α ≤ 15° ausgebildet. Beispielsweise ist α = 15°, β = 3°, γ = 1° gewählt.

Die Erstreckungshöhe h₁ des radial inneren Erstreckungsbereiches 14 ist kleiner gewählt als die radiale Erstreckungshöhe h₃ des radial inneren Erstreckungsbereiches 15, d. h., h₁ < h₃. Die radiale Erstreckungshöhe h₁ ist dabei so gewählt, dass am Neureifen (1/2 P_{T}) ≤ h₁ ≤ (2/3(P_{T}). Beispielsweise ist h₁ = (1/2)P_{T} gewählt.

Die Länge L der Vertiefungen 8 ist mit 5mm ≤ L ≤ 15mm ausgebildet. Beispielsweise ist L = 10 mm. Die Länge s des Steges 9 ist mit 1mm ≤ s ≤ 5mm ausgebildet. Beispielsweise ist s = 3 mm. In jedem Umfangserstreckungsabschnitt 10 ist jeweils in Umfangsrichtung U dem Paar von Vertiefungen 8 vor- und nachgeordnet ein Steg 9 der Steglänge (s/2) ausgebildet. Wie in Figur 1 und 4 zu erkennen ist, ergibt sich hierdurch auch in den Übergängen zwischen den in Umfangsrichtung hintereinander angeordneten Umfangsabschnitten 10 jeweils zwischen der ersten Vertiefung 8 des einen Umfangsabschnitts 10 und der zweiten Vertiefung 8 des vorangegangenen Umfangsabschnitts 10 ein die beiden Vertiefungen 8 trennender (Gesamt)Steg 9 der Gesamtsteglänge s.

In einer weiteren Ausfuhrungsform ist im Umfangsabschnitt 10 jeweils ein radialer Abstand h₅ vom Rillengrund 6 zum radial inneren Erstreckungsbereich 14 der Rillenwand 4 ausgebildet mit 0 mm ≤ h₅ ≤ 2 mm. In den in den Figuren 2 und 3 dargestellten Ausführungsbeispiel ist h₅ = 0 mm gewählt.

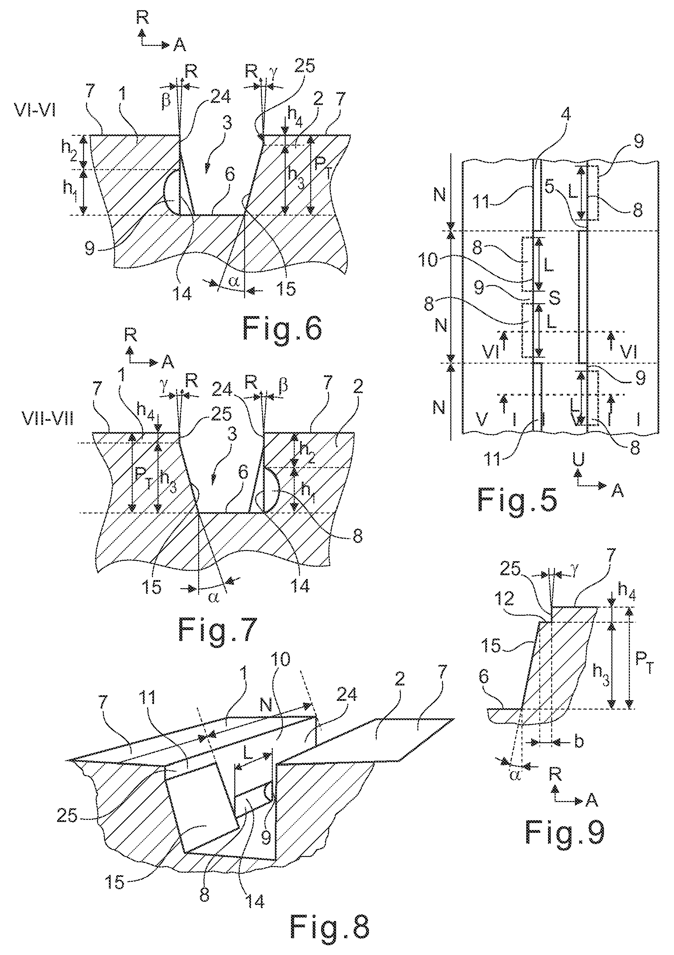

Die Figuren 5 bis 8 zeigen ein alternatives Ausführungsbeispiel, in dem jeweils zwischen zwei in Umfangsrichtung U hintereinander angeordneten Umfangsabschnitten 10 ein Umfangsabschnitt 11 ausgebildet ist, so dass die Umfangsabschnitte 10 und 11 in Umfangsrichtung U gesehen über den Umfang des Fahrzeugluftreifens in alternierender Abfolge angeordnet sind. Die Umfangsabschnitte 10 sind wie bereits im Zusammenhang mit den Figuren 1 bis 4 erläutert ausgebildet. In den Umfangsabschnitten 11 ist die Rillenwand 4 aus dem radial äußeren Erstreckungsabschnitt 25 der radialen Erstreckungshöhe h₄, welche unter einem Neigungswinkel γ zur Radialen R von der Umfangsrille 3 wegweisend geneigt ist, und aus dem in radialer Richtung R nach innen sich anschließenden radial inneren Erstreckungsabschnitt 15 der radialen Erstreckungshöhe h₃, welche unter einem Neigungswinkel α zur Radialen R von der Umfangsrille 3 wegweisend geneigt ist, ausgebildet. D. h., die Rillenwand 4 ist im Umfangsabschnitt 11 analog zur Rillenwand 5 der Umfangsabschnitte 10 ausgebildet. Ebenso ist die Rillenwand 5 im Umfangsabschnitt 11 analog zur Rillenwand 4 im Umfangsabschnitt 10 ausgebildet, d. h., die Rillenwand 5 ist im Umfangsabschnitt 11 aus einem radial äußeren Erstreckungsabschnitt 24 der Erstreckungshöhe h₂ und aus einem radial inneren Erstreckungsabschnitt 14 der radialen Erstreckungshöhe h₁ ausgebildet und unter einem Neigungswinkel β zur Radialen R von der Umfangsrille 3 wegweisend geneigt ausgebildet. Der radial äußere Erstreckungsabschnitt 24 der Rillenwand 5 ist im Umfangsabschnitt 11 ebenso wie der radial äußere Erstreckungsabschnitt 25 und der radial innere Erstreckungsabschnitt 15 der Rillenwand 4 im Umfangsabschnitt 11 in seiner Oberflächenstruktur eben ausgebildet. Der radial innere Erstreckungsabschnitt 14 der Rillenwand 5 des Umfangsabschnitts 11 ist mit zwei in Umfangsrichtung U hintereinander angeordneten ringsegmentförmigen Vertiefungen 8 der in Umfangsrichtung U gemessenen Erstreckungslänge L und der in radialer Richtung R gemessenen Erstreckungshöhe h₁ ausgebildet. Die beiden Vertiefungen 8 sind durch einen Steg 9 der in Umfangsrichtung U gemessenen Erstreckungslänge s voneinander getrennt. Einem Paar von Vertiefungen 8 des Umfangsabschnitts 11 jeweils vor- und nachgeordnet ist ein Steg 9 der Erstreckungslänge (s/2).

Figur 9 zeigt eine alternative Ausbildung der Ausbildung einer Rillenwand mit radial inneren Erstreckungsabschnitt 15 und radial äußerem Erstreckungsabschnitt 25 am Beispiel des Umfangsabschnitts 10. Bei diesem Ausführungsbeispiel ist die Rillenwand 5 wie im Zusammenhang mit den Figuren 1 bis 4 beschrieben aus einem radial äußeren Erstreckungsabschnitt 25, welche unter dem Neigungswinkel γ zur Radialen R geneigt ist, und aus einem in radialer Richtung R nach innen sich anschließenden radial inneren Erstreckungsabschnitt 15, welche unter dem Neigungswinkel α zur Radialen R geneigt ist, ausgebildet. In der Position des radial äußeren Erstreckungsendes des radial inneren Erstreckungsabschnitts 15 ist jedoch der radial äußere Erstreckungsabschnitt 25 in axialer Richtung A um ein Erstreckungsmaß b versetzt ausgebildet, so dass im Übergang zwischen radial innerem Erstreckungsabschnitt 15 zum radial äußeren Erstreckungsabschnitt 25 eine parallel zur Mantelfläche 7 ausgebildete Stufe der Breite b ausgebildet ist. Das Erstreckungsmaß b des Versatzes ist mit 0,5 ≤ b ≤ 2 mm ausgebildet. Beispielsweise ist b = 1 mm gewählt.

### Bezugszeichenliste

### (Teil der Beschreibung)

- 1: Profilrippe
- 2: Profilrippe
- 3: Umfangsrille
- 4: Rillenwand
- 5: Rillenwand
- 6: Rillengrund
- 7: Mantelfläche
- 8: Vertiefung
- 9: Steg
- 10: Umfangsabschnitt
- 11: Umfangsabschnitt
- 12: Versatz
- 13 14: Radial innerer Erstreckungsabschnitt
- 15: Radial innerer Erstreckungsabschnitt
- 24: Radial äußerer Erstreckungsabschnitt
- 25: Radial äußerer Erstreckungsabschnitt

## Patentansprüche

1. Laufstreifenprofil eines Fahrzeugluftreifens mit radial erhabenen Profilbändern (1,2), von denen jeweils zwei durch eine Umfangsrille (3), welche in radialer Richtung R nach innen durch einen Rillengrund (6) und in axialer Richtung A des Fahrzeugluftreifens zu beiden Seiten hin jeweils durch eine eine Profilbandflanke bildende Rillenwand (4,5) begrenzt wird, axial getrennt sind,
wobei in einem Umfangsabschnitt (10) die eine Rillenwand (4) aus einem radial äußeren Erstreckungsabschnitt (24) der Höhe h₂ mit ebener Fläche der Rillenwand (4) und aus einem sich nach innen anschließender radial inneren Erstreckungsabschnitt (14) der Höhe h₁ ausgebildet ist, wobei dieser radial innere Erstreckungsabschnitt (14) aus wenigstens zwei in Umfangsrichtung U hintereinander angeordneten Vertiefungen (8) der in radialer Richtung R gemessenen Höhe h₁ besteht, die in dem Umfangsabschnitt (10) durch einen mit ebener Fläche ausgebildeten Rillenwandabschnitt (9) voneinander beabstandet sind,
**dadurch gekennzeichnet,**
**dass** in dem Umfangsabschnitt (10) die eine Rillenwand (4) mit einem Neigungswinkel β zur Radialen R geneigt ausgebildet ist und die andere (5) der beiden Rillenwände in einem radial inneren Erstreckungsabschnitt (15) der Höhe h₃ mit einem Neigungswinkel α zur Radialen R und in einem sich anschließenden radial äußeren Erstreckungsabschnitt (25) der Höhe h₄ mit einem Neigungswinkel γ zur Radialen R mit α > β > γ ausgebildet ist, und dass die Höhe h₁ mit h₁ < h₃ ausgebildet ist.

2. Laufstreifenprofil gemäß den Merkmalen von Anspruch 1,
wobei die Vertiefungen (8) in der Rillenwand (4) mit einer zentrisch zur Achse des Fahrzeugluftreifens ringsegmentförmige Kontur ausgebildet sind.

3. Laufstreifenprofil gemäß den Merkmalen von Anspruch 1 oder 2,
wobei die Umfangsrille (3) - insbesondere über ihren gesamten Umfang hinweg - mit mehreren unmittelbar in Umfangsrichtung U hintereinander angeordneten derartigen Umfangsabschnitten (10) ausgebildet ist.

4. Laufstreifenprofil gemäß den Merkmalen von Anspruch 1 oder 2,
wobei die Umfangsrille mit in Umfangsrichtung U alternierend angeordneten ersten (10) und zweiten (11) derartigen Umfangsabschnitten ausgebildet ist, wobei bei den ersten Umfangsabschnitten (10) die eine Rillenwand (14,24) diejenige Rillenwand ist, die zur Außenschulter des Fahrzeugluftreifens weist, und die andere Rillenwand (15,25) diejenige Rillenwand ist, die zur Innenschulter des Reifens weist, und wobei bei den zweiten Umfangsabschnitten (11) die eine Rillenwand (14,24) diejenige Rillenwand ist, die zur Innenschulter des Reifens weist, und die andere Rillenwand (15,25) diejenige Rillenwand ist, die zur Außenschulter des Fahrzeugluftreifens weist.

5. Laufstreifenprofil gemäß den Merkmalen von einem der vorangegangenen Ansprüche,
wobei die Höhe h₁ mit (1/2)P_{T} ≤ h₁ ≤ (2/3) P_{T} ausgebildet ist und P_{T} die maximale Rillentiefe der Umfangsrille (3) im Umfangsabschnitt (10,11) angibt.

6. Laufstreifenprofil gemäß den Merkmalen von einem der vorangegangenen Ansprüche,
wobei die Vertiefungen (8) mit einer in Umfangsrichtung U gemessenen Länge L ausgebildet sind mit 5mm ≤ L ≤ 15mm.

7. Laufstreifenprofil gemäß den Merkmalen von einem der vorangegangenen Ansprüche,
wobei der in dem Umfangsabschnitt (10,11) mit ebener Fläche ausgebildete die beiden Vertiefungen (8) voneinander beabstandende Rillenwandabschnitt (9) mit einer in Umfangsrichtung U gemessenen Länge s ausgebildet ist mit 1mm ≤ s ≤ 5mm.

8. Laufstreifenprofil gemäß den Merkmalen von einem der vorangegangenen Ansprüche,
wobei der in dem Umfangsabschnitt (10,11) mit ebener Fläche ausgebildete die beiden Vertiefungen (8) voneinander beabstandende Rillenwandabschnitt (9) mit einer in Umfangsrichtung U gemessenen Länge s ausgebildet ist mit s ≤ (1/5)L.

9. Laufstreifenprofil gemäß den Merkmalen von einem der vorangegangenen Ansprüche,
wobei in dem Umfangsabschnitt (10,11) in der einen Rillenwand ein radialer Abstand h₅ vom Rillengrund (6) zum radial inneren Erstreckungsbereich (14) ausgebildet ist mit 0mm ≤ h₅ ≤ 2mm.

10. Laufstreifenprofil gemäß den Merkmalen von einem der vorangegangenen Ansprüche,
wobei in dem Umfangsabschnitt (10,11) die andere Rillenwand (15,25) in ihrem radial äußeren Erstreckungsabschnitt (25) der Höhe h₄ mit einem in axialer Richtung A von der Umfangsrille (3) weg gerichteten Versatz b gegenüber dem radial inneren Erstreckungsabschnitt (15) ausgebildet ist mit 0,5mm ≤ b ≤ 2mm.

## Claims

1. Tread profile of a pneumatic vehicle tyre having radially elevated profile bands (1, 2), of which in each case two are axially separated by a circumferential channel (3) which is delimited in a radial direction R toward the inside by a channel base (6) and in an axial direction A of the pneumatic vehicle tyre to both sides in each case by a channel wall (4, 5) which forms a profile band flank,
wherein, in a circumferential section (10), one channel wall (4) is formed from a radially outer extent section (24) of height h₂ with a planar surface of the channel wall (4) and from an inwardly adjoining radially inner extent section (14) of height h₁, wherein said radially inner extent section (14) is composed of at least two depressions (8) which are arranged one behind the other in the circumferential direction U and which have the height h₁ measured in the radial direction R and which are spaced apart from one another in the circumferential section (10) by a channel wall section (9) formed with a planar wall surface,
**characterized**
**in that**, in the circumferential section (10), one channel wall (4) is formed so as to be inclined relative to the radial direction R by an angle of inclination β, and the other (5) of the two channel walls is, in a radially inner extent section (15) of height h₃, formed with an angle of inclination α relative to the radial direction R and, in an adjoining radially outer extent section (25) of height h₄, formed with an inclination angle γ relative to the radial direction R, where α > β > γ, and in that the height h₁ is configured such that h₁ < h₃.

2. Tread profile according to the features of Claim 1,
wherein the depressions (8) in the channel wall (4) are formed with a contour which is ring-segment-shaped concentrically with respect to the axis of the pneumatic vehicle tyre.

3. Tread profile according to the features of Claim 1 or 2,
wherein the circumferential channel (3) is - in particular over its entire circumference - formed with multiple such circumferential sections (10) arranged directly one behind the other in the circumferential direction U.

4. Tread profile according to the features of Claim 1 or 2,
wherein the circumferential channel is formed with first (10) and second (11) such circumferential sections arranged alternately in the circumferential direction U, wherein, in the first circumferential sections (10), one channel wall (14, 24) is that channel wall which points toward the outer shoulder of the pneumatic vehicle tyre,
and the other channel wall (15, 25) is that channel wall which points toward the inner shoulder of the tyre, and wherein, in the second circumferential sections (11), one channel wall (14, 24) is that channel wall which points toward the inner shoulder of the tyre, and the other channel wall (15, 25) is that channel wall which points toward the outer shoulder of the pneumatic vehicle tyre.

5. Tread profile according to the features of one of the preceding claims,
wherein the height h₁ is configured such that (1/2) P_{T} ≤ h₁ ≤ (2/3) P_{T}, and P_{T} denotes the maximum channel depth of the circumferential channel (3) in the circumferential section (10, 11).

6. Tread profile according to the features of one of the preceding claims,
wherein the depressions (8) are formed with a length L measured in the circumferential direction U, where 5 mm ≤ L ≤ 15 mm.

7. Tread profile according to the features of one of the preceding claims,
wherein the channel wall section (9) which is formed with a planar surface, and which spaces the two depressions (8) apart from one another, in the circumferential section (10, 11) is formed with a length s measured in the circumferential direction U, where 1 mm ≤ s ≤ 5 mm.

8. Tread profile according to the features of one of the preceding claims,
wherein the channel wall section (9) which is formed with a planar surface, and which spaces the two depressions (8) apart from one another, in the circumferential section (10, 11) is formed with a length s measured in the circumferential direction U, where s ≤ (1/5) L.

9. Tread profile according to the features of one of the preceding claims,
wherein, in the circumferential section (10, 11), in one channel wall, a radial spacing h₅ is formed from the channel base (6) to the radially inner extent region (14), where 0 mm ≤ h₅ ≤ 2 mm.

10. Tread profile according to the features of one of the preceding claims,
wherein, in the circumferential section (10, 11), the other channel wall (15, 25) is, in its radially outer extent section (25) of height h₄, formed with an offset b, directed away from the circumferential channel (3) in the axial direction A, relative to the radially inner extent section (15), where 0.5 mm ≤ b ≤ 2 mm.

## Revendications

1. Profil de bande de roulement d'un bandage pneumatique de véhicule avec des bandes de profil (1, 2) surélevées radialement, dont chaque fois deux sont séparées axialement par une gorge périphérique (3), qui est limitée en direction radiale R vers l'intérieur par un fond de gorge (6) et en direction axiale A du bandage pneumatique de véhicule vers les deux côtés chaque fois par une paroi de gorge (4, 5) formant un flanc de bande de profil,
dans lequel, dans une partie périphérique (10), une première paroi de gorge (4) est formée d'une partie d'extension radialement extérieure (24) de hauteur h₂ avec une face plane de la paroi de gorge (4) et d'une partie d'extension radialement intérieure (14) de hauteur h₁ s'y raccordant vers l'intérieur, dans lequel cette partie d'extension radialement intérieure (14) se compose d'au moins deux creux (8) disposés l'un derrière l'autre en direction périphérique U de la hauteur h₁ mesurée en direction radiale R, qui sont espacés l'un de l'autre dans la partie périphérique (10) par une partie de paroi de gorge (9) formée avec une face plane,
**caractérisé en ce que** dans la partie périphérique (10) ladite première paroi de gorge (4) est réalisée sous forme inclinée avec un angle d'inclinaison β par rapport à la direction radiale R et l'autre (5) des deux parois de gorge est réalisée dans une partie d'extension radialement intérieure (15) de hauteur h₃ avec un angle d'inclinaison α par rapport à la direction radiale R et dans une partie d'extension radialement intérieure (25) qui s'y raccorde de hauteur h₄ avec un angle d'inclinaison γpar rapport à la direction radiale R avec α > β > γ, et **en ce que** la hauteur h₁ est réalisée avec h₁ < h₃.

2. Profil de bande de roulement selon les caractéristiques de la revendication 1, dans lequel les creux (8) dans la paroi de gorge (4) sont formés avec un contour en forme de segment d'anneau centralement par rapport à l'axe du bandage pneumatique de véhicule.

3. Profil de bande de roulement selon les caractéristiques de la revendication 1 ou 2, dans lequel la gorge périphérique (3) est formée - en particulier sur toute sa périphérie - avec plusieurs parties périphériques de ce type (10) disposées immédiatement l'une derrière l'autre en direction périphérique U.

4. Profil de bande de roulement selon les caractéristiques de la revendication 1 ou 2, dans lequel la gorge périphérique est formée avec des premières (10) et des deuxièmes (11) parties périphériques de ce type disposées en alternance dans la direction périphérique U, dans lequel dans les premières parties périphériques (10) ladite première paroi de gorge (14, 24) est la paroi de gorge qui est tournée vers l'épaulement extérieur du bandage pneumatique de véhicule, et l'autre paroi de gorge (15, 25) est la paroi de gorge qui est tournée vers l'épaulement intérieur du pneumatique, et dans lequel dans les deuxièmes parties périphériques (11) ladite première paroi de gorge (14, 24) est la paroi de gorge qui est tournée vers l'épaulement intérieur du pneumatique, et l'autre paroi de gorge (15, 25) est la paroi de gorge qui est tournée vers l'épaulement extérieur du bandage pneumatique de véhicule.

5. Profil de bande de roulement selon les caractéristiques de l'une quelconque des revendications précédentes, dans lequel la hauteur h₁est réalisée avec (1/2) P_{T} ≤ h₁ ≤ (2/3) P_{T} et P_{T} indique la profondeur de gorge maximale de la gorge périphérique (3) dans la partie périphérique (10, 11).

6. Profil de bande de roulement selon les caractéristiques de l'une quelconque des revendications précédentes, dans lequel les creux (8) sont formés avec une longueur L mesurée dans la direction périphérique U, avec 5 mm ≤ L ≤ 15 mm.

7. Profil de bande de roulement selon les caractéristiques de l'une quelconque des revendications précédentes, dans lequel la partie de paroi de gorge (9) espaçant l'un de l'autre les deux creux (8) et formée avec une face plane dans la partie périphérique (10, 11) est formée avec une longueur s mesurée dans la direction périphérique U, avec 1 mm ≤ s ≤ 5 mm.

8. Profil de bande de roulement selon les caractéristiques de l'une quelconque des revendications précédentes, dans lequel la partie de paroi de gorge (9) espaçant l'un de l'autre les deux creux (8) et formée avec une face plane dans la partie périphérique (10, 11) est formée avec une longueur s mesurée dans la direction périphérique U, avec s ≤ (1/5)L.

9. Profil de bande de roulement selon les caractéristiques de l'une quelconque des revendications précédentes, dans lequel une distance radiale h₅ du fond de gorge (6) à la partie d'extension radialement intérieure (14) est formée dans la partie périphérique (10, 11) dans ladite première paroi de gorge, avec 0 mm ≤ h₅ ≤ 2 mm.

10. Profil de bande de roulement selon les caractéristiques de l'une quelconque des revendications précédentes, dans lequel dans la partie périphérique (10, 11) l'autre paroi de gorge (15, 25) est formée dans sa partie d'extension radialement extérieure (25) de hauteur h₄ avec un décalage b dirigé en direction axiale A à partir de la gorge périphérique (3) par rapport à la partie d'extension radialement intérieure (15) avec 0,5 mm ≤ b ≤ 2 mm.
